# EUROPEAN PATENT SPECIFICATION

(11) **EP 2 340 160 B1**
(45) Date of publication and mention of the grant of the patent: **12.12.2018**
(21) Application number: 09736117.4
(22) Date of filing: 08.10.2009
(51) Int. Cl.: B29D 99/00, B29C 70/48, B29C 70/34, F01D 5/00, F03D 1/06

(54) **A METHOD OF MANUFACTURING A POLYMER COMPOSITE MEMBER BY USE OF TWO OR MORE RESINS**
VERFAHREN ZUR HERSTELLUNG EINES POLYMERVERBUNDGLIEDS DURCH VERWENDUNG VON ZWEI ODER MEHR HARZEN
PROCÉDÉ DE FABRICATION D'UN ÉLÉMENT COMPOSITE POLYMÈRE REPOSANT SUR L'UTILISATION D'AU MOINS DEUX RÉSINES

(30) Priority: 08.10.2008 DK 200801413
(43) Date of publication of application: 06.07.2011
(73) Proprietor: Vestas Wind Systems A/S, 8200 Aarhus N (DK)
(72) Inventor: HAAG, Michael Drachmann, DK-6710 Esbjerg V (DK); NIELSEN, Kim Sylvester, DK-6880 Tarm (DK)
(74) Representative: Vestas Patents Department
(86) International application number: PCT/DK2009/050267
(87) International publication number: WO 2010/040359

(56) References cited:
- EP-A- 0 247 708
- WO-A-03/035380
- US-A- 4 784 285
- US-A- 5 843 354
- US-A- 6 048 488
- US-A1- 2008 305 340
- US-A1- 2009 116 966
- US-B1- 6 197 242

## Description

### FIELD OF THE INVENTION

The present invention relates to a method of manufacturing a polymer composite member by use of two or more resins, and in particular to resin infusion techniques wherein the resins are infused concurrently.

### BACKGROUND OF THE INVENTION

Polymer composites, such as fibre reinforced composites, are used in the wind turbine industry, e.g. for wind turbine blades, and a possible manufacturing process is resin transfer moulding which may be vacuum assisted. The resin material is e.g. epoxy, polyester or vinyl ester, and each material exists in a range of products including some having at least one additive added to modify the mechanical properties, such as the fracture toughness and the stiffness. Such additives typically result in a significantly higher material price, and the choice of resin for a given product must therefore be a compromise between optimal material properties and price.

EP0247708 describes a multi-injection process for moulding polyurethane products by reaction injection moulding.

Hence, an improved method of manufacturing a polymer composite member would be advantageous, and in particular one in which it is possible to optimize the use of the resin would be advantageous.

### OBJECT OF THE INVENTION

It is an object of the present invention to provide a method of manufacturing a composite member by which method the resin properties can be optimised to suit the different parts of the member.

It is another object of the present invention to provide a method of manufacturing a composite member by which an abrupt transition between regions with different resin properties can be avoided. Hereby the risk of stress concentrations due to abrupt changes in elastic properties can be lowered or removed.

It is another object of some embodiments of the present invention to provide a method of manufacturing a wind turbine blade or a part of a wind turbine blade wherein the resin at the root end of the blade can be optimised with respect to mechanical properties, such as fracture toughness, crack growth rate and stiffness, without causing an unnecessary increase in the price of the blade.

It is a further object of the present invention to provide an alternative to the prior art.

### SUMMARY OF THE INVENTION

Thus, the above described object and several other objects are intended to be obtained in a first aspect of the invention by providing a method of manufacturing a polymer composite member according to claim 1.

The step of curing the resins typically comprises application of heat for a predetermined period of time.

In some embodiments of the invention the step of providing a mould cavity wherein a reinforcement material is arranged may comprise the steps of placing at least one layer of reinforcement material on a first mould part of a mould set, and connecting a second mould part of the mould set to the first mould part to form the mould cavity surrounding the reinforcement material.

By "on a first mould part" is preferably meant that the reinforcement is placed on top of a substantially horizontally arranged first mould part. However, if the invention is applied to substantially vertically arranged mould parts, "on" is meant to indicate a placement adjacent or next to the mould part.

The second mould part may be either rigid or flexible. With a rigid mould part it may be easier to ensure that the desired outer dimensions of the composite member are obtained. On the other hand a flexible second mould part, such as a plastic sheet, may be cheaper and easier to handle.

In preferred embodiments of the invention, the step of transferring the resins into the reinforcement material may comprise the use of a vacuum assisted resin infusion technique. Hereby it can be obtained that the finished composite member does not contain any significant amount of trapped air which would otherwise constitute mechanical weaknesses in the material and less control over the properties. Alternatively or in combination therewith, the resins may be led to the mould cavity under pressure.

The reinforcement material may preferably comprise layers of fibres. In some embodiments of the invention, the reinforcement comprises layers of different fibres and/or transitions between different fibres. Such fibres will typically be fibre mats of e.g. glass, carbon, aramide, basalt or thermoplastic in which the fibres are arranged either unidirectionally or mutually angled; the fibres may also be interwoven. The reinforcement material may also e.g. have a spatial extension, be honey-comb material or wood, and it may be used instead of or in combination with fibre mats. By "different" is preferably meant different fibre materials, such as e.g. glass and carbon fibres. By "transitions" is preferably meant that an abrupt change from one type of fibre to another is avoided. Hereby the risk of stress concentrations due to abrupt changes in elastic properties can be lowered or removed. Two types of fibres may be used in combination with two resins so that a first type of fibre is used in the first region of the mould cavity and the second type of fibres is used in the second region of the mould cavity.

The differences in mechanical properties may be due to additives added to at least the first resin. The first resin may e.g. correspond to the second resin except for the additives. By using the same type of resin it may be easier to ensure a good mixing in the third region. However, that may also be possible with two different types of resin.

In some embodiments, the at least one additive may be selected from: silicon dioxide, titanium dioxide, barium sulphate, and carbon nano-tubes. A characteristic size, such as an average diameter or an average length, of the at least one additive may be in the range 1 to 500 nm, such as 1 to 10 nm, 10 to 50 nm, 50 to 100 nm, 100 to 300 nm, or 300 to 500 nm. Such additives can be used to improve the mechanical properties, such as the fracture toughness, the fatigue strength and the stiffness of the material. This is particularly relevant in highly loaded areas or in resin rich areas of a structural member. The size of the particles is typically chosen to be so small that the particles do not block openings between the reinforcement and to so that an even distribution between the reinforcement is ensured.

Alternatively or in combination therewith, the first resin may be rubber-modified. It may e.g. be a rubber-modified version of the second resin. This may result in improved mechanical properties particularly with respect to fracture, fatigue and vibration dampening. The robber-modified resin could e.g. be ATBN- (Amine-Terminated-Butadiene-Acrylonitrile copolymer) or CBTN-type (Carboxyl-Terminated-Butadiene-Acrylonitrile copolymer) epoxy.

The resins may be selected from: epoxy, polyester, and vinyl ester. However, any type of resin material used for manufacturing composite members is covered by the scope of the present invention.

The first resin may be used for a root end of the wind turbine blade or part of wind turbine blade. Hereby the root end of the blade can be optimised regarding e.g. fracture toughness and low crack growth rate without causing an unnecessary increase in the price of the blade. In a preferred embodiment of the invention the first resin has higher fatigue strength than the second resin.

### BRIEF DESCRIPTION OF THE FIGURES

The method of manufacturing a polymer composite member according to the invention will now be described in more detail with regard to the accompanying figures. The figures show one way of implementing the present invention and is not to be construed as being limiting to other possible embodiments falling within the scope of the attached claim set.
Figure 1 shows schematically a cross sectional view of a known mould set,
Figure 2 shows schematically a cross sectional view of a mould set used in a method according to the present invention,
Figure 3 shows schematically two resins flowing towards each other inside a mould cavity, and
Figure 4 shows schematically a possible use of the present invention for the manufacturing of a wind turbine blade. The figure shows a second mould part having inlets for two types of resins.

### DETAILED DESCRIPTION OF AN EMBODIMENT

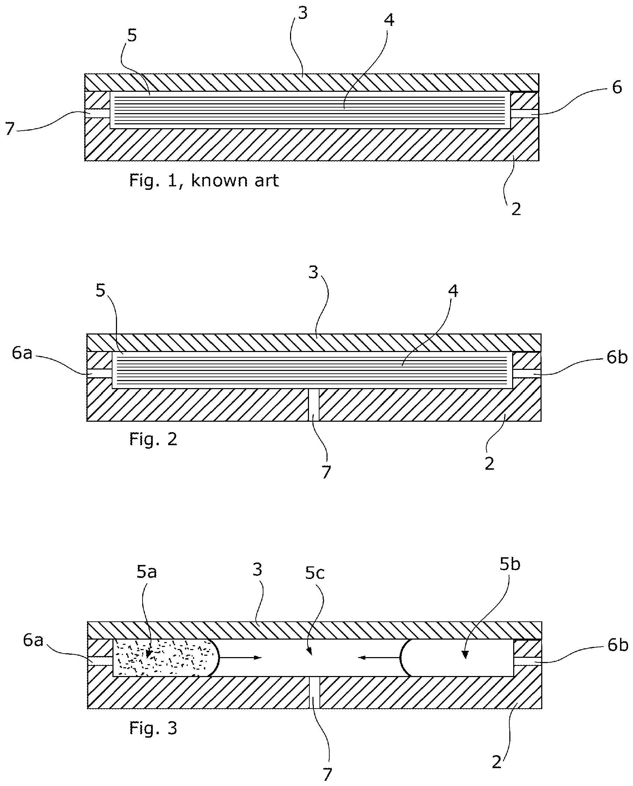

Figure 1 shows schematically a known mould set 1 used for manufacturing a fibre composite member by use of a resin transfer moulding technique. The mould set 1 comprises a first mould part 2 and a second mould part 3 which is typically treated with a release agent and possibly also a coating layer before use. In this and the following figures, both mould parts 2,3 are illustrated as rigid members, but the second mould part 3 may also be flexible, such as a plastic sheet being fastened to the first mould part 2 by use of sealing tape. Layers of fibres 4, typically in the form of mats, and possibly a peel ply (not shown) are placed on the first mould part 2, and the second mould part 3 is placed on top thereof. The resin is led to the mould cavity 5 via a resin inlet 6, also called a resin infusion port, and into the fibres 4. Preparation of the resin is not included in the figures, but it will be well known to a person skilled in the art how to carry out this part of the process. The flow of resin through the mould cavity 5 is typically assisted by vacuum which is also used to extract air from the mould cavity 5 via a vacuum port 7 before resin is supplied. When substantially all the air has been evacuated from the mould cavity 5, resin is supplied via a resin inlet 6 and made to flow along the mould cavity 5 while filling up the empty spaces between the fibres 4. In the illustrated embodiment, the resin inlet 6 and the vacuum port 7 are shown as being arranged in the first mould part 2. They may alternatively be arranged in the second mould part 3 which is typically the case when a flexible plastic sheet is used. When the appropriate amount of resin has been added, the member is left to cure the resin. This step typically comprises application of heat for a predetermined period of time.

In a manufacturing method according to the present invention, at least two resins are used instead of one. The following description will focus on the use of two resins, but use of three or more resins is also possible within the scope of the invention. Figure 2 illustrates schematically a mould set 1 with a resin inlet 6a,6b at each end; the inlets may also be arranged at other positions. A first resin is led into the mould cavity 5 via a first resin inlet 6a, and a second resin is led into the mould cavity 5 via a second resin inlet 6b. As for figure 1, the flow of resin may be assisted by vacuum, and in this case the vacuum port 7 is placed at the region where the two resins will meet. As shown schematically in figure 3, the first resin will fill up a first region 5a of the mould cavity, the second resin will fill up a second region 5b of the cavity, and a mixture of the resins will be established in a third region 5c of the mould cavity. The size of the third region 5c will depend on a number of parameters including the flow velocities, the viscosities and the geometry of the mould cavity.

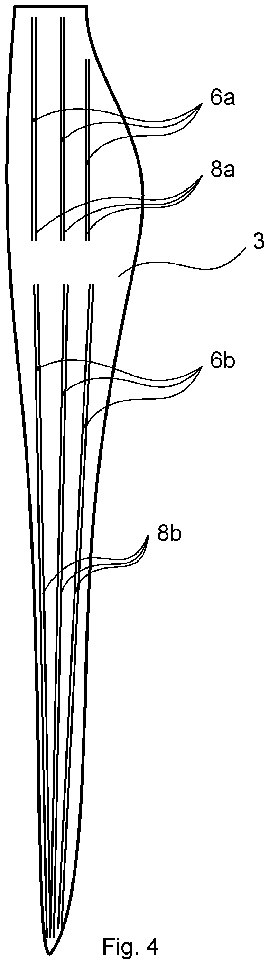

The present invention is e.g. advantageous for structural members being significantly higher loaded in some regions of the member than in others. This is e.g. the case for wind turbine blades where the bending moments and forces are largest at the root end of the blade. Another advantageous wind turbine blade application is for resin rich areas around the root inserts. However, the invention may also be used to manufacture members with variations in other parameters, such as density or colour, in different regions. Figure 4 shows schematically a possible arrangement of resin inlets 6a,6b in a second mould part 3 used to manufacture a wind turbine blade for which a first resin is used for the root end and another, typically cheaper, second resin is used for the remainder of the blade. Due to the large size of such blades, the resins are typically led from the inlets 6a,6b into channels 8a,8b in the second mould part 3. The flow resistance is much lower in the channels 8a,8b than between the reinforcing fibres, and the channels 8a,8b therefore ensure that the resin is distributed to the whole mould cavity.

The first resin can e.g. be of the same type as the second resin but being modified with additives to obtain better mechanical properties, such as higher fracture toughness, stiffness or fatigue strength. Such improved properties can e.g. be obtained by adding nano-size particles in the form of silicon dioxide, titanium dioxide, barium sulphate, or carbon nanotubes. It can also be obtained by use of a rubber modified resin. In principle an improved resin material could be used for the whole blade, but that would be too expensive. An alternative could be to assemble the blade from more parts each made with one resin, but that would result in a more complicated manufacturing process including the assembling. Furthermore, the manufacturing in one moulding process results in a smoother transition between the first and the second region, which may lower the risk of stress concentrations due to changes in elastic properties.

Although the present invention has been described in connection with the specified embodiments, it should not be construed as being in any way limited to the presented examples. The scope of the present invention is set out by the accompanying claim set.

E.g. the description mentions use of a resin material and a modified version thereof. However it is also covered by the present invention to use a resin modified in two different ways, such as by addition of carbon nano-tubes and rubber respectively, or to use two or more significantly different resins, such as polyester as the first resin and vinyl ester as the second resin.

In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

E.g. the description mentions use of a resin material and a modified version thereof. However it is also covered by the present invention to use a resin modified in two different ways, such as by addition of carbon nano-tubes and rubber respectively, or to use two or more significantly different resins, such as polyester as the first resin and vinyl ester as the second resin.

In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method of manufacturing a polymer composite member comprising a wind turbine blade or a part of a wind turbine blade by a resin infusion technique, the method comprising the steps of
- providing a mould cavity (5) wherein a reinforcement material (4) is arranged, the mould cavity having at least one first resin inlet (6a) for a first resin and at least one second resin inlet (6b) for a second resin, the first and second resins having different mechanical properties after curing,
- concurrently leading the first resin into a first region (5a) of the mould cavity (5) via the first inlet (6a) and leading the second resin into a second region (5b) of the mould cavity via the second inlet (6b),
- transferring the resins into the reinforcement material (4) so that the resins at least partly merge in a third region (5c) of the mould cavity (5),
- curing the resins, wherein
- the first and second resins have different mechanical properties after curing due to additives added to at least the first resin, and/or
- the first resin is a rubber-modified version of the second resin, and/or
- the first resin is selected from: epoxy, polyester or vinyl ester and the second resin is a different resin selected from epoxy, polyester or vinyl ester.

2. A method according to claim 1, wherein the step of transferring the resins into the reinforcement material (4) comprises the use of a vacuum assisted resin infusion technique.

3. A method according to claim 1 or 2, wherein the reinforcement material (4) comprises layers of different fibres and/or transitions between different fibres.

4. A method according to claim 1, wherein the at least one additive is selected from: silicon dioxide, titanium dioxide, barium sulphate, and carbon nano-tubes.

5. A method according to claim 1, wherein a characteristic size, such as an average diameter or an average length, of the at least one additive is in the range 1 to 500 nm, such as 1 to 10 nm, 10 to 50 nm, 50 to 100 nm, 100 to 300 nm, or 300 to 500 nm.

6. A method according to claim 1, wherein the first resin is used for a root end of the wind turbine blade or part of wind turbine blade.

7. A method according to claim 6, wherein the first resin has higher fatigue strength than the second resin.

## Patentansprüche

1. Verfahren zur Herstellung eines Polymer-Verbundstoffelements, ein Windturbinenblatt oder einen Teil eines Windturbinenblatts umfassend, durch eine Harzinfusionstechnik, wobei das Verfahren die folgenden Schritte umfasst
- Bereitstellen eines Formnestes (5), in dem ein Verstärkungsmaterial (4) angeordnet ist, wobei das Formnest mindestens einen ersten Harzeinlass (6a) für ein erstes Harz und mindestens einen zweiten Harzeinlass (6b) für ein zweites Harz aufweist, wobei das erste und zweite Harz nach dem Aushärten unterschiedliche mechanische Eigenschaften aufweisen,
- Gleichzeitig Führen des ersten Harzes in eine erste Region (5a) des Formnestes (5) über den ersten Einlass (6a) und Führen des zweiten Harzes in eine zweite Region (5b) des Formnestes über den zweiten Einlass (6b),
- Übertragen der Harze in das Verstärkungsmaterial (4), sodass die Harze mindestens teilweise in einer dritten Region (5c) des Formnestes (5) zusammenlaufen,
- Aushärten der Harze, wobei
- das erste und zweite Harz aufgrund von Zusatzstoffen, die mindestens dem ersten Harz zugesetzt werden, nach dem Aushärten unterschiedliche mechanische Eigenschaften aufweisen, und/oder
- das erste Harz eine kautschukmodifizierte Version des zweiten Harzes ist, und/oder
- das erste Harz ausgewählt ist aus: Epoxid, Polyester oder Vinylester und das zweite Harz ein unterschiedliches Harz, ausgewählt aus Epoxid, Polyester oder Vinylester, ist.

2. Verfahren nach Anspruch 1, wobei der Schritt des Übertragens der Harze in das Verstärkungsmaterial (4) die Verwendung von vakuumunterstützter Harzinfusionstechnik umfasst.

3. Verfahren nach Anspruch 1 oder 2, wobei das Verstärkungsmaterial (4) Schichten aus unterschiedlichen Fasern und/ oder Übergängen zwischen unterschiedlichen Fasern umfasst.

4. Verfahren nach Anspruch 1, wobei der mindestens eine Zusatzstoff ausgewählt ist aus: Siliziumdioxid, Titandioxid, Bariumdioxid und Kohlenstoff-Nanoröhrchen.

5. Verfahren nach Anspruch 1, wobei eine charakteristische Größe, wie ein durchschnittlicher Durchmesser oder eine durchschnittliche Länge des mindestens einen Zusatzstoffes in dem Bereich von 1 bis 500 nm, wie 1 bis 10 nm, 10 bis 50 nm, 50 bis 100 nm, 100 bis 300 nm oder 300 bis 500 nm liegt.

6. Verfahren nach Anspruch 1, wobei das erste Harz für ein Wurzelende des Windturbinenblattes oder Teil des Windturbinenblattes verwendet wird.

7. Verfahren nach Anspruch 6, wobei das erste Harz eine höhere Ermüdungsfestigkeit aufweist als das zweite Harz.

## Revendications

1. Procédé de fabrication d'un élément composite polymère comprenant une aube d'éolienne ou une partie d'aube d'éolienne par une technique d'infusion de résine, le procédé comprenant les étapes consistant à
- fournir une cavité de moulage (5) dans laquelle une matière de renforcement (4) est agencée, la cavité de moulage ayant au moins un orifice d'entrée de résine (6a) pour une première résine et au moins un deuxième orifice d'entrée de résine (6b) pour une deuxième résine, les première et deuxième résines ayant différentes propriétés mécaniques après durcissement,
- introduire simultanément la première résine dans une première région (5a) de la cavité de moulage (5) via le premier orifice d'entrée (6a) et introduire la deuxième résine dans une deuxième région (5b) de la cavité de moulage via le deuxième orifice d'entrée (6b),
- transférer les résines dans la matière de renforcement (4) de sorte que les résines fusionnent au moins partiellement dans une troisième région (5c) de la cavité de moulage (5),
- durcir les résines, dans lequel
- les première et deuxième résines ont différentes propriétés mécaniques après durcissement dues aux additifs ajoutés à au moins la première résine, et/ou
- la première résine est une version modifiée par un caoutchouc de la deuxième résine, et/ou
- la première résine est choisie parmi : l'époxy, le polyester ou l'ester vinylique et la deuxième résine est une résine différente choisie parmi l'époxy, le polyester ou l'ester vinylique.

2. Procédé selon la revendication 1, dans lequel l'étape de transfert des résines dans la matière de renforcement (4) comprend l'utilisation d'une technique d'infusion de résine à dépression.

3. Procédé selon la revendication 1 ou 2, dans lequel la matière de renforcement (4) comprend des couches de différentes fibres et/ou transitions entre différentes fibres.

4. Procédé selon la revendication 1, dans lequel l'au moins un additif est choisi parmi : le dioxyde de silicium, le dioxyde de titane, le sulfate de baryum et des nanotubes de carbone.

5. Procédé selon la revendication 1, dans lequel une taille caractéristique, telle qu'un diamètre moyen ou une longueur moyenne, de l'au moins un additif est dans la plage de 1 à 500 nm, telle que de 1 à 10 nm, de 10 à 50 nm, de 50 à 100 nm, de 100 à 300 nm ou de 300 à 500 nm.

6. Procédé selon la revendication 1, dans lequel la première résine est utilisée pour une extrémité de pied de l'aube d'éolienne ou une partie d'aube d'éolienne.

7. Procédé selon la revendication 6, dans lequel la première résine a une résistance à la fatigue plus élevée que la deuxième résine.
